(19) Europäisches Patentamt
European Patent Office
Office européen des brevets

(11) EP 0 759 953 B2

(12) # NEUE EUROPÄISCHE PATENTSCHRIFT

(45) Veröffentlichungstag und Bekanntmachung des Hinweises auf die Entscheidung über den Einspruch:
**27.09.2006 Patentblatt 2006/39**

(45) Hinweis auf die Patenterteilung:
**22.07.1998 Patentblatt 1998/30**

(21) Anmeldenummer: **95917313.9**

(22) Anmeldetag: **12.04.1995**

(51) Int Cl.:
***C08K 5/3435*** *(2006.01)* ***C08G 69/48*** *(2006.01)*

(86) Internationale Anmeldenummer:
**PCT/EP1995/001349**

(87) Internationale Veröffentlichungsnummer:
**WO 1995/028443 (26.10.1995 Gazette 1995/46)**

(54) **INHÄRENT LICHT- UND HITZESTABILISIERTE POLYAMIDE**
INHERENTLY LIGHT- AND HEAT-STABILIZED POLYAMIDES
POLYAMIDES INTRINSEQUEMENT STABLES A LA LUMIERE ET A LA CHALEUR

(84) Benannte Vertragsstaaten:
**AT BE CH DE ES FR GB GR IE IT LI NL PT**

(30) Priorität: **15.04.1994 DE 4413177**
**17.08.1994 DE 4429089**

(43) Veröffentlichungstag der Anmeldung:
**05.03.1997 Patentblatt 1997/10**

(73) Patentinhaber: **BASF Aktiengesellschaft**
**67056 Ludwigshafen (DE)**

(72) Erfinder:
- **WEINERTH, Klaus**
  **D-67434 Neustadt (DE)**
- **MELL, Karlheinz**
  **D-67067 Ludwigshafen (DE)**
- **MATTHIES, Paul**
  **D-69121 Heidelberg (DE)**
- **BEER, Ludwig**
  **D-67061 Ludwigshafen (DE)**

(74) Vertreter: **Isenbruck, Günter et al**
**Isenbruck, Bösl, Hörschler, Wichmann, Huhn**
**Patentanwälte**
**Theodor-Heuss-Anlage 12**
**68165 Mannheim (DE)**

(56) Entgegenhaltungen:
**EP-A- 0 345 648** **EP-A- 0 379 470**
**WO-A-91/03511** **DE-A- 3 233 951**
**DE-A- 3 233 953** **FR-A- 2 074 871**
**FR-A- 2 513 646**

- **PATENT ABSTRACTS OF JAPAN vol. 017, no. 251 (C-1060) 19. Mai 1993 & JP,A,05 001 223 (SHOWA DENKO KK) 8. Januar 1993**

Bemerkungen:
Die Akte enthält technische Angaben, die nach dem Eingang der Anmeldung eingereicht wurden und die nicht in dieser Patentschrift enthalten sind.

EP 0 759 953 B2

## Beschreibung

Die Erfindung betrifft verbesserte Polyamide. Insbesondere betrifft die Erfindung inhärent licht- und hitzestabilisierte Polyamide. Ferner betrifft die Erfindung ein Verfahren zur Herstellung dieser Polyamide und ihre Verwendung.

Die Hitzebeständigkeit von Polyamiden, u. a. auch von Polyamid 6 und Polyamid 66, ist für manche Anwendungen nicht ausreichend. So können sich z. B. Probleme bei der Anfärbung durch chemische Veränderungen (oxidativ/thermische Schädigung) der Polymere bei Hitzefixier-(Heat Setting-)prozessen von Teppichfäden oder textilen Flächengebilden ergeben. Diese Probleme können endlose oder geschnittene Fäden (Stapelfasern) betreffen. Es ist bekannt, den Polyamiden Stabilisatoren zur Verbesserung dieser Eigenschaften zuzusetzen. Ein derartiger Zusatz kann vor, während oder nach der Polymerisation erfolgen, z. B. auch erst während der Verarbeitung. Die üblichen bekannten Stabilisatoren werden dem Polymeren beigemischt und sind nicht an die Polymerkette gebunden. Sie können daher bei der Verarbeitung oder im Gebrauch mehr oder minder leicht aus dem Polymeren auswandern, verdampfen oder ausgewaschen werden, so daß sich die Wirksamkeit der Stabilisierung in unerwünschter Weise vermindert und Verunreinigungen an die Umgebung (Luft, Färbebad) abgegeben werden können.

DE-OS 20 40 975, Sankyo Co. Ltd., beschreibt die Stabilisierung synthetischer Polymere, u. a. auch von Polyamiden, mit 4-Aminopiperidin-Derivaten. Unter der Vielzahl der dort aufgeführten 4-Aminopiperidin-Derivate ist auch 4-Amino-2,2,6,6-Tetramethylpiperidin offenbart (vgl. Seite 8, Nr. 32 der Druckschrift). Jedoch wird dieses Piperidin-Derivat weder besonders hervorgehoben noch wird es in einem Beispiel verwendet. Gemäß dieser Druckschrift werden die 4-Aminopiperidin-Derivate mit den fertigen Polymeren vermischt, ohne daß diese an die Polymerkette gebunden sind.

DE-PS 39 32 912, Sandoz, betrifft Polyamide, die im Molekül Reste mit sterisch gehinderten Aminogruppen, insbesondere 2,2,6,6-Tetramethylpiperidyl-4-Reste enthalten. Die Anzahl der Reste beträgt im Mittel 5 bis 200 pro Polyamidmolekül. Gemäß der Patentschrift eignen sich diese Polyamide u. a. zur Verbesserung der Anfärbbarkeit von Polyamiden und als Lichtstabilisatoren für Kunststoffe; sie sollen diesen dafür in Mengen von 1 - 10 Gew.-% zugesetzt werden und insbesondere in der Schmelze eingemischt werden.

In einem Aufsatz in Poly. Deg. and Stab. 21, 251 - -262 (1988), wird beschrieben, daß die Lichtbeständigkeit von Polyamid 66 durch einen Zusatz von 2,2,6,6-Tetramethylpiperidin-4-ol (TMP) verbessert wird. Bei einer Nachkondensation des TMP-haltigen Polyamid 66 in der Schmelze bei 275°C unter Wasserdampfatmosphäre habe, wie die Autoren annehmen, TMP mit den Carboxyl-Endgruppen des Polyamids reagiert (s. S. 259 des Aufsatzes). Allerdings gebe es Anzeichen für eine (unerwünschte) Vernetzung während der späteren Stadien der Belichtung.

Es ist bekannt, Amine oder Mono- oder Dicarbonsäuren als Kettenregler bei der Polymerisation von Polyamiden zu verwenden, wobei in der Praxis weit überwiegend Monocarbonsäuren für diesen Zweck eingesetzt werden.

Eine Aufgabe der vorliegenden Erfindung war es, inhärent licht- und hitzestabilisierte Polyamide und Verfahren zu ihrer Herstellung bereitzustellen. Es wurde gefunden, daß Polyamide durch einen schon vor Beginn oder im Verlauf der Polymerisation erfolgenden Zusatz von Triacetondiamin-Verbindungen der Formel

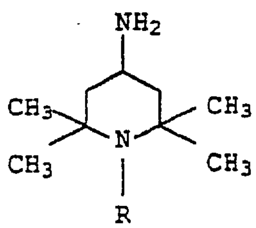

gegen Licht- und Hitzeschädigung stabilisiert werden können. Hierbei bedeutet R Wasserstoff (4-Amino-2,2,6,6-tetramethylpiperidin) oder Kohlenwasserstoffreste mit 1 bis 20 C-Atomen, bevorzugt Alkylgruppen (4-Amino-1-alkyl-2,2,6,6-tetramethylpiperidin) mit 1 bis 18 C-Atomen, oder eine Benzylgruppe. Somit betrifft die vorliegende Erfindung ein Verfahren zur Herstellung von Polyamiden, ausgenommen Thermoplastisch verarbeitbare, durch hydrolytische Polymerisation erhältliche Polyamide aus Aminosäuren und/oder Lactamen als Grundbausteine, wobei mindestens 50 Gew.-% der Polymermoleküle mehr als eine Kettenverzweigung besitzen, wobei die Polyamide in der Weise erhältlich sind, daß der Schmelze der Grundmonomeren verzweigend wirkende Komponenten in folgender Zusammensetzung zugesetzt werden:

a) 5 bis 150 μMol/g Polymeres eines mindestens trifunktionellen, aus einem Amin oder einer Carbonsäure bestehenden Monomeren sowie

b) 2 bis 100 μMol/g Polymeres eines mindestens bifunktionellen, aus einer Carbonsäure oder einem Amin bestehenden Monomeren, mit der Maßgabe, daß dann, wenn a) ein Amin ist,. b) eine Carbonsäure sein muß, sowie dann, wenn a) eine Carbonsäure ist, b) ein Amin sein muß, sowie gegebenenfalls

c) 5 bis 450 μMol/g Polymeres eines bei einer üblichen Polykondensation monofunktionell wirkenden Monomeren, wobei ein Molverhältnis der Komponente a) zu der Komponente.b) von mindestens 1 eingehalten wird, wenn die Komponente a) trifunktionell und die Komponente b) bifunktionell ist und von mindestens 2 eingehalten wird, wenn die Komponente a) und die Komponente b) trifunktionell sind,

dadurch gekennzeichnet, daß die Polymerisation bzw. Polykondensation von Ausgangsmonomeren in Gegenwart von mindestens einer Triacetondiamin-Verbindung der Formel

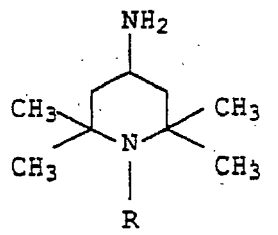

durchgeführt wird, wobei R Wasserstoff oder Kohlenwasserstoffreste mit 1 bis 20 C-Atomen, bevorzugt Alkylgruppen mit 1 bis 18 C-Atomen, oder eine Benzylgruppe bedeutet. Bevorzugte Ausführungsformen des erfindungsgemäßen Verfahrens sind in den Unteransprüchen beschrieben. Weiterhin betrifft die Erfindung ein inhärent licht- und hitzestabilisiertes Polyamid, ausgenommen Thermoplastisch verarbeitbare, durch hydrolytische Polymerisation erhältliche Polyamide aus Aminosäuren und/oder Lactamen als Grundbausteine, wobei mindestens 50 Gew.-% der Polymermoleküle mehr als eine Kettenverzweigung besitzen, wobei die Polyamide in der Weise erhältlich sind, daß der Schmelze der Grundmonomeren verzweigend wirkende Komponenten in folgender Zusammensetzung zugesetzt werden:

a) 5 bis 150 μMol/g Polymeres eines mindestens trifunktionellen, aus einem Amin oder einer Carbonsäure bestehenden Monomeren sowie

b) 2 bis 100 μMol/g Polymeres eines mindestens bifiunktionellen, aus einer Carbonsäure oder einem Amin bestehenden Monomeren, mit der Maßgabe, daß dann, wenn a) ein Amin ist, b) eine Carbonsäure sein muß, sowie dann, wenn a) eine Carbonsäure ist, b) ein Amin sein muß, sowie gegebenenfalls

c) 5 bis 450 μMol/g Polymeres eines bei einer üblichen Polykondensation monofunktionell wirkenden Monomeren, wobei ein Molverhältnis der Komponente a) zu der Komponente.b) von mindestens 1 eingehalten wird, wenn die Komponente a) trifunktionell und die Komponente b) bifunktionell ist und von mindestens 2 eingehalten wird, wenn die Komponente a) und die Komponente b) trifunktionell sind.

das durch einen an die Polymerkette chemisch gebundenen Aminrest der Formel

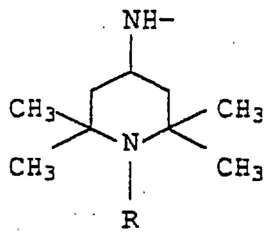

gekennzeichnet ist, wobei R die obengenannte Bedeutung hat. Bevorzugte erfindungsgemäße Polyamide sind in den entsprechenden Unteransprüchen definiert.

Die Triacetondiamin-Verbindung wird den Ausgangsmonomeren oder der polymerisierenden Reaktionsmischung zugesetzt und wird durch Reaktion seiner primären Aminogruppe mit den Ausgangsmonomeren bzw mit den Carboxylgruppen des entstehenden Polyamids an das Kettenende der Polymerkette gebunden. Die sekundäre Aminogruppe der Triacetondiamin-Verbindung reagiert dabei wegen sterischer Hinderung nicht. Somit wirkt die Triacetondiamin-Verbindung auch als Kettenregler.

Durch die chemische Bindung der Triacetondiamin-Verbindung an die Polymerkette des Polyamids werden inhärent stabilisierte Polyamide erhalten. Das erfindungsgemäße Verfahren bietet somit den Vorteil, daß ein ansonsten für das Einmischen eines Stabilisators in das Polyamid benötigter gesonderter Verfahrensschritt nicht mehr erforderlich ist. Hiermit entfallen Probleme bzw. Qualitätsminderungen, wie sie beim Einmischen eines Stabilisators nach oberflächlicher Aufbringung auf das Polyamidgranulat, durch Unverträglichkeit, Viskositätsabbau, Auswandem, Verdampfen oder Auswaschen des Stabilisators oder eine doppelte Beanspruchung wie z. B. beim Einkonfektionieren entstehen können. Durch das erfindungsgemäße Verfahren werden die Polyamide durch die Triacetondiamin-Verbindung gegen Schädigung durch Hitzeeinwirkung und Thermooxidation bei der Verarbeitung und im Gebrauch geschützt.

Die Polymerisation bzw. Polykondensation der Ausgangsmonomere in Gegenwart der Triacetondiamin-Verbindung wird vorzugsweise nach den üblichen Verfahren durchgeführt. So kann die Polymerisation des Caprolactams in Gegenwart von Triacetondiamin (R = H) beispielsweise nach den in DE 14 95 198 und DE 25 58 480 beschriebenen kontinuierlichen Verfahren erfolgen. Die Polymerisation von AH-Salz in Gegenwart von Triacetondiamin kann nach dem üblichen diskontinuierlichen Verfahren (siehe: Polymerization Processes S.424-467, insbesondere S. 444-446, Interscience, New York, 1977) oder nach einem kontinuierlichen Verfahren, z. B. gemäß EP 129 196, erfolgen. Grundsätzlich können die Triacetondiamin-Verbindung und die Ausgangsmonomeren getrennt oder als Gemisch dem Reaktor zugeführt werden. Vorzugsweise führt man die Triacetondiamin-Verbindung nach einem vorgegebenen Menge-/Zeit-Programm zu.

In einer bevorzugten Ausgestaltung des erfindungsgemäßen Verfahrens werden als Ausgangsmonomere Caprolactam oder mindestens eine Dicarbonsäure A ausgewählt aus Adipinsäure, Sebacinsäure und Terephthalsäure und mindestens ein Diamin ausgewählt aus Hexamethylendiamin und Tetramethylendiamin, oder Dicarbonsäure-Diamin-Salze davon, polymerisiert bzw. polykondensiert. Besonders bevorzugt ist Caprolactam. Als Dicarbonsäure A besonders bevorzugt sind Adipinsäure und Terephthalsäure. Bei entsprechender Auswahl der Ausgangsmonomeren führt die Polymerisation bzw. Polykondensation zu den bevorzugten Polyamiden Polyamid 6, Polyamid 66, Polyamid 46 oder Polyamid 610.

In einer bevorzugten Ausführungsform wird die Triacetondiamin-Verbindung den Ausgangsmonomeren in einer Menge von 0,03 bis 0,8 Mol-%, vorzugsweise von 0,06 bis 0,4 Mol-%, jeweils bezogen auf 1 Mol Säureamidgruppen des Polyamids zugesetzt. Diese Mengenangabe bezieht sich beispielsweise bei der Herstellung von Polyamid 6 auf 1 Mol Caprolactam oder bei der Herstellung von Polyamid 66 auf 0,5 Mol AH-Salz. Es wurde festgestellt, daß bei Mengen von unter 0,03 Mol-% keine ausreichende Stabilisierung erreicht wird, wohingegen bei Mengen über 0,8 Mol-% der gewünschte Polymerisationsgrad wegen der Reglerwirkung der Triacetondiamin-Verbindung nicht erreicht wird.

In einer bevorzugten Ausgestaltung der Erfindung wird die Triacetondiamin-Verbindung mit mindestens einem der üblichen Kettenregler kombiniert. Geeignete Kettenregler sind z. B. Monocarbonsäuren wie Essigsäure, Propionsäure und Benzoesäure. Hierbei werden die Kettenreglerkombination und die angewandten Mengen u. a. nach dem gewünschten Amino-Endgruppengehalt des Endproduktes und nach der gewünschten Schmelzestabilität ausgewählt. Der Amino-Endgruppengehalt richtet sich dabei nach der gewünschten Anfärbbarkeit der Fäden bzw. Fasem. Die Schmelzstabilität richtet sich nach den praktischen Erfordernissen bei der Verarbeitung der Produkte, Insbesondere bei der Verspinnung.

Vorzugsweise enthält das nach dem erfindungsgemäßen Verfahren hergestellte Polyamid 6 (Polycaprolactam) neben der Triacetondiamin-Verbindung Dicarbonsäuren B als Kettenregler. Insbesondere bei Polyamid 6 besitzen derartige Produkte neben der erforderlichen Schmelzestabilität, der gewünschten Anfärbbarkeit der Fäden bzw. Fasern und einer guten Licht- und Hitzestabilität außerdem eine verbesserte Festigkeit der dabei erhaltenen Fäden, insbesondere beim Schnellspinnen mit sehr hohen Geschwindigkeiten.

Die als Kettenregler in Kombination mit der Triacetondiamin-Verbindung eingesetzten Dicarbonsäuren B können gleich den als Dicarbonsäure A eingesetzten Dicarbonsäuren sein oder verschieden davon sein. Sie werden vorzugsweise ausgewählt aus: $C_4$-$C_{10}$-Alkandicarbonsäuren, insbesondere Adipinsäure, Azelainsäure, Sebacinsäure und Dodecandisäure; $C_5$-$C_8$-Cycloalkandicarbonsäuren, insbesondere Cyclohexan-1,4-dicarbonsäure; sowie Benzol- und Naphthalindicarbonsäuren, insbesondere Isophthalsäure, Terephthalsäure und Naphthalin-2,6-dicarbonsäure. Vorzugsweise setzt man die Dicarbonsäuren B in einer Menge von 0,06 bis 0,6 Mol-%, bevorzugt 0,1 bis 0,5 Mol-%, jeweils bezogen auf 1 Mol Säureamidgruppen des Polyamids, ein.

In einer anderen bevorzugten Ausgestaltung wird die Polymerisation bzw. Polykondensation nach dem erfindungsgemäßen Verfahren in Gegenwart mindestens eines Pigments durchgeführt. Bevorzugte Pigmente sind Titandioxid oder farbgebende Verbindungen anorganischer oder organischer Natur. Die Pigmente werden vorzugsweise in einer Menge von 0 bis 5 Gewichtsteile, insbesondere 0,02 bis 2 Gewichtsteile, jeweils bezogen auf 100 Gewichtsteile Polyamid, zugegeben. Die Pigmente können dem Reaktor mit den Ausgangsstoffen oder getrennt davon zugeführt werden. Durch die Verwendung der Triacetondiamin-Verbindung (auch als Kettenreglerbestandteil) wird die Lichtstabilität des Polymeren deutlich verbessert gegenüber einem Polymeren, das nur Pigment und kein Triacetondiamin enthält.

Die Erfindung betrifft auch die Verwendung erfindungsgemäßer, inhärent licht- und hitzestabilisierter Polyamide zur Herstellung von Fäden, Fasern oder Folien. Femer betrifft die Erfindung ein Verfahren zur Herstellung von Fäden

auf der Basis von Polycaprolactam durch Schnellspinnen bei Abzugsgeschwindigkeiten von mindestens 4000 m/min sowie die daraus hergestellten Fäden. Darüber hinaus umfaßt die Erfindung die Verwendung erfindungsgemäß hergestellter Fäden zur Herstellung von Fasern und Flächengebilden sowie die durch diese Verwendung erhältlichen Fasern und Flächengebilde.

Die Erfindung wird im folgenden anhand der Beispiele erläutert.

Allgemeines zu den Beispielen

Die relative Viskosität der Polyamide (Granulat und Fäden) wurde in 1 %iger Lösung (1 g/100 ml) in konzentrierter Schwefelsäure (96 Gew.-%) bei 25°C bestimmt. Die Bestimmung des Endgruppengehalts wurde als acidimetrische Titration durchgeführt. Die Amino-Endgruppen wurden in einer Lösung in Phenol/Methanol 70: 30 (Gewichtsteile) mit Perchlorsäure titriert. Die Carboxyl-Endgruppen wurden in einer Lösung in Benzylalkohol mit Kalilauge titriert.

Der Gehalt der Polyamide an der Triacetondiamin-Verbindung und ggf. an Dicarbonsäuren kann nach Hydrolyse einer Probe in verdünnter Mineralsäure durch Analyse des Hydrolysats nach üblichen Methoden, etwa gaschromatographisch, bestimmt werden.

Die Bestimmung der Hitzebeständigkeit der Polyamidfäden erfolgte unter Bedingungen, die denen von Thermofixierprozessen in Folgebehandlungsstufen wie z. B. Hitzefixieren (Heatsetten) von BCF (bulked continuous filament) oder Spannrahmenfixierung textiler Flächengebilde weitgehend entsprechen. Von den verstreckten Fäden wurden Stränge von jeweils 5 g abgeweift, zusammen mit den Vergleichsmustern auf einer Haltevorrichtung rasch in einen auf 185°C vorgeheizten Umluftofen eingebracht und dort ab Wiedererreichen der in unmittelbarer Probenähe gemessenen Lufttemperatur weiter 120 Sekunden belassen. Anschließend wird die Probe sofort entnommen und bei 20°C Raumtemperatur an der Luft abgekühlt. Zu vergleichende Fäden wurden gemeinsam behandelt.

Als Maß der eingetretenen Schädigung wurde (im Vergleich zu einer unbehandelten Probe des gleichen Fadens) die Abnahme der relativen Viskosität und des Aminogruppengehaltes sowie die Zunahme des Carboxylgruppengehaltes bewertet.

Die absolute Abnahme der basischen Gruppen wird anschließend zur praxisgerechteren Beurteilung in eine prozentuale Abnahme, bezogen auf die unbehandelte Garnprobe umgerechnet.

Die Höchstzugkraftdehnung wurde mit einem Uster-Tensorapid-I-Meßgerät bestimmt, wobei die Einspannlänge bei vororientierten Fäden (POY) 200 mm, bei verstreckten und texturierten Fäden 500 mm betrug. Die Prüfzeit bis zum Bruch der Fäden lag im Bereich 20±2 Sekunden. Die Vorspannkraft betrug bei POY 0,025 cN/dtex, bei verstreckten Fäden 0,05 cN/dtex.

Die feinheitsbezogene Höchstzugkraft $R_H$ wurde nach folgender Gleichung berechnet:

$$R_H = F_H/Tt_v$$

wobei $F_H$ die Höchstzugkraft [cN] und $Tt_v$ die Ausgangsfeinheit [dtex] bedeuten. Als Höchstzugkraft wurde der größte Wert bei den Höchstzugkraftdehnungs-Messungen verwendet.

Die Höchstzugkraftdehnung $E_H$ wurde als Verhältnis der Längenänderung $\Delta l$ bei Erreichen der Höchstzugkraft zur Ausgangs länge $l_v$ der Meßprobe gemäß folgender Gleichung bestimmt:

$$E_H = \Delta l \cdot 100\ \%/l_v$$

wobei sich $\Delta l$ aus der Differenz der Länge der Probe bei Höchstzugkraft, $l_H$, und der Ausgangslänge $l_v$ errechnet.

Beispiel 1

Als Polymerisationsreaktor wurde ein VK-Rohr nach EP 20946 aus nichtrostendem Stahl, Werkstoff Nr. 1.4541, verwendet. Das VK-Rohr hatte ein Betriebsvolumen von 340 1 und wurde mit einem Wärmeträgeröl beheizt.

Eine Mischung aus 100 Gewichtsteilen geschmolzenem Caprolactam, 0,5 Gewichtsteilen Wasser und 0,33 Gewichtsteilen Terephthalsäure wurde dem VK-Rohr oben in der ersten Reaktionszone kontinuierlich in einer Menge von 41 kg/h unter Rühren zugeführt. Gleichzeitig wurde Triacetondiamin als separater Strom dem VK-Rohr in der ersten Reaktionszone kontinuierlich in einer Menge von 55 ml/h zugeführt. Die Konzentration an Triacetondiamin betrug damit 0,087 Mol-%, die Konzentration an Terephthalsäure 0,23 Mol-%, jeweils bezogen auf 1 Mol Caprolactam. Die Temperatur der ersten Reaktionszone betrug 266°C; der Druck in der Dampfphase über der ersten Reaktionszone betrug 1,5 bar

absolut. Polycaprolactam wurde unten aus dem VK-Rohr ausgetragen, in Granulat übergeführt, mit heißem Wasser extrahiert und getrocknet. Das getrocknete Polymer hatte eine relative Viskosität von 2,70, einen Amino-Endgruppengehalt von 39 meq/kg und einen Carboxyl-Endgruppengehalt von 65 meq/kg.

Das Produkt wurde bei 275°C Schmelzetemperatur auf einer Ems-Inventa-Pilotspinnanlage mit 23 g/min pro Düse aus Düsen mit 0,2 mm Lochdurchmesser und 0,6 mm Düsenkanallänge als Galetten-POY schnellgesponnen.

Die Geschwindigkeiten betrugen für das 1. Duo 4520 m/min, für das 2. Duo 4530 m/min und den Barmag Craft-Wickler 4500 m/min.

Unterhalb der Düse wurden die Fäden in einem Barmag Blasschacht mit Queranblasung durch einen Luftstrom mit 20°C/65 % relative Feuchte und 0,4 m/sec Geschwindigkeit gekühlt. Die Präparierung erfolgte mit einer handelsüblichen Präparation (Limanol E 100, Fa. Schill & Seilacher, 0,65 % Auflage auf Faden) über Dosierpumpe und keramische Öler im Blasschacht. Das POY hatte folgende Kenndaten: Höchstzugkraftdehnung 72 %, feinheitsbezogene Höchstzugkraft 4,1 cN/dtex, Uster Normaltest U % = 0,6.

Anschließend wurde auf einer Zinser 14 S Streckzwirnmaschine kalt mit einem Streckverhältnis 1 : 1,363 mit 820 m/min nachverstreckt. Die so erhaltenen Fäden hatten eine Höchstzugkraftdehnung von 37 %, eine feinheitsbezogene Höchstzugkraft von 5,2 cN/ dtex und eine Ustergleichmäßigkeit U % (Normaltest) von 0,7. Der Titer war 43,1 12 dtex.

Die relative Viskosität war 2,70, die Amino-Endgruppenkonzentration betrug 35 und die Carboxyl-Endgruppenkonzentration 63 meq/kg.

Vergleichsbeispiel 1

Handelsübliches Polyamid 6 der relativen Viskosität 2,67 ohne Triacetondiamin wurde unter identischen Bedingungen wie im Beispiel 1 versponnen. Das POY hatte folgende Kenndaten: Höchstzugkraftdehnung 73 %, feinheitsbezogene Höchstzugkraft 4,0 cN/dtex, Uster Normaltest U % = 0,6.

Anschließend wurde mit einem Streckverhältnis von 1 : 1,336 kalt nachverstreckt. Die so erhaltenen Fäden hatten eine Höchstzugkraftdehnung von 43 %, eine feinheitsbezogene Höchstzugkraft von 4,8 cN/dtex und eine Ustergleichmäßigkeit U % (Normaltest) von 0,5. Der Titer war 43,8 f 12 dtex. Die relative Viskosität war 2,66, der Gehalt an Amino-Endgruppen betrug 32 meq/kg und an Carboxyl-Endgruppen 53 meq/kg. Die Fäden wurden einer Wärmebehandlung von 120 s in Luft von 185°C unterworfen und zeigten folgende Werte:

Tabelle 1

| | | **Beispiel** 1 | Vergleichsbeispiel 1 |
|---|---|---|---|
| relative Viskosität | unbehandelt | 2,70 | 2,66 |
| | behandelt | 2,45 | 2,20 |
| | Abnahme | - 0,25 | - 0,46 |
| Amino-Endgruppen (meq/kg) | unbehandelt | 35 | 32 |
| | behandelt | 26 | 21 |
| | Abnahme | - 9 | - 11 |
| | Abnahme (%) | -26% | -34% |
| Carboxyl-Endgruppen (meq/kg) | unbehandelt | 63 | 53 |
| | behandelt | 67 | 71 |
| | Zunahme | +4 | + 18 |

Tabelle 1 ist zu entnehmen, daß die erfindungsgemäßen Polyamide 6 nach der Wärmebehandlung eine geringere Abnahme der relativen Viskosität und des Aminogruppengehalts sowie eine kleinere Zunahme des Carboxylgruppengehaltes zeigen als das Polyamid von Vergleichsbeispiel 1 und somit eine bessere Hitzestabilisierung aufweisen.

Beispiel 2

Caprolactam wurde in demselben VK-Rohr wie in Beispiel 1 unter Zusatz von 0,38 Mol-% Terephthalsäure, 0,20 Mol-% Triacetondiamin, 0,5 Gew.-% Wasser und 0,3 Gew.-% Titandioxid (als Mattierungsmittel) polymerisiert. Die Polymerisation wurde bei einem Durchsatz von 25 kg/h und einer Temperatur von 255°C in der ersten Reaktionszone unter Normaldruck durchgeführt. Die Arbeitsweise entsprach im übrigen der von Beispiel 1. Das getrocknete Produkt hatte eine relative Viskosität von 2,37, einen Amino-Endgruppengehalt von 45 meq/kg und einen Carboxyl-Endgruppengehalt von 79 meq/kg.

Das Produkt wurde in einem Barmag-Einschneckenextruder aufgeschmolzen und mit 270°C Schmelzetemperatur einem Spinnsystem vom Typ Barmag SP 42 zugeführt. Aus einer Fördermenge von 22,6 g/min und Düse sowie der Verwendung von 12-Loch-Spinndüsen mit Kapillarbohrungen von 0,20 mm Durchmesser und 0,60 mm Länge ergab sich bei 4500 m/min Aufspulgeschwindigkeit ein Spinn-(POY-)Titer von 52f 12 dtex. Nach Passieren eines Blasschachtes mit Querstromanblasung von 0,40 m/sec und Präparierung mit 0,60 bis 0,65 % einer handelsüblichen Präparation (Limanol E 100 von Fa. Schill & Seilacher als 8 %ige Lösung) wurden die Fäden über 2 Galettenduos mit 4510 bzw. 4535 m/min abgezogen. Als Spulkopf wurde ein achsgetriebener Barmag Craft Wickler eingesetzt. Das POY hatte eine Höchstzugkraftdehnung von 65 %, eine feinheitsbezogene Höchstzugkraft von 4,6 cN/dtex und einen Kochschrumpf von 9 %.

Das POY wurde auf einer Streckzwirnmaschine Rieter J5/10a mit 748 m/min kalt streckgezwirnt. Die Anspannung betrug im Vorstreckfeld 0,8 %, das Gesamtstreckverhältnis war 1 : 1,298.

Die verstreckten Filamente hatten eine Höchstzugkraftdehnung von 36 %, eine feinheitsbezogene Höchstzugkraft von 5,2 cN/dtex, einen Titer von 44 f 12 dtex und einen Usterwert U % (Normaltest) von 0,7.

Die relative Viskosität wurde mit 2,41, die Amino-Endgruppen wurden mit 42 und die Carboxyl-Endgruppen wurden mit 74 meq/kg bestimmt.

Vergleichsbeispiel 2

Handelsübliches Polyamid 6 der relativen Viskosität 2,39, das kein Triacetondiamin enthielt, wurde in der im Beispiel 2 beschriebenen Weise extrudiert. Abkühlung und Präparierung der Fäden erfolgten wie zuvor beschrieben. Aufgespult wurde galettenlos mit 4500 m/min. Das POY hatten eine Höchstzugkraftdehnung von 62 %, eine feinheitsbezogene Höchstzugkraft von 4,2 cN/dtex und einen Kochschrumpf von 9 %.

Das POY wurde wie in Beispiel 2 kalt nachverstreckt, das Gesamtstreckverhältnis betrug in diesem Fall 1 : 1,279. Die verstreckten Filamente hatten eine Höchstzugkraftdehnung von 34 %, eine feinheitsbezogene Höchstzugkraft von 4,6 cN/dtex, einen Titer von 43,6 f 12 dtex und einen Uster-Wert U % (Normaltest) von 0,9.

Die relative Viskosität der Fäden betrug 2,41, die Amino-Endgruppen wurden mit 25 und die Carboxyl-Endgruppen mit 65 meq/kg bestimmt.

Die Fäden wurden den einer textilen Spannrahmenfixierung entsprechenden Bedingungen (185°C Heißluft, 120 sec) unterworfen und folgende Kennzahlen gemessen:

Tabelle 2

| | | **Beispiel 2** | **Vergleichsbeispiel2** |
|---|---|---|---|
| relative Viskosität | unbehandelt<br>behandelt<br>Abnahme | 2,41<br>2,28<br>- 0,13 | 2,41<br>1,84<br>- 0,57 |
| Amino-Endgruppen (meq/kg) | unbehandelt<br>behandelt<br>Abnahme<br>Abnahme (%) | 42<br>34<br>- 8<br>- 19% | 25<br>13<br>- 12<br>- 48% |
| Carboxyl-Endgruppen (meq/kg) | unbehandelt<br>behandelt<br>Zunahme | 74<br>75<br>+1 | 65<br>93<br>+ 28 |

Tabelle 2 zeigt anschaulich, daß in Gegenwart von Triacetondiamin zu Polyamid 6 polymerisiertes Caprolactam eine bessere Hitzestabilisierung zeigt als das Polyamid 6 von Vergleichsbeispiel 2, das kein Triacetondiamin enthält.

Beispiel 3

Nach Beispiel 2, jedoch ohne Zusatz von Titandioxid, hergestelltes Polyamid wurde entsprechend Beispiel 2 schnellgesponnen. Das POY hatte eine Höchstzugkraftdehnung von 64 %, eine feinheitsbezogene Höchstzugkraft von 4,7 cN/dtex und einen Kochschrumpf von 10 %.

Die Verstreckung erfolgte unter den in Beispiel 2 angeführten Bedingungen. Die verstreckten Fäden hatten danach eine Höchstzugkraftdehnung von 37 %, eine feinheitsbezogene Höchstzugkraft von 5,4 cN/dtex, einen Kochschrumpf von 14 %, eine Ustergleichmäßigkeit U % (Normaltest) von 0,8 und einen Titer von 44 f 12 dtex.

Die relative Viskosität betrug 2,40, die Amino-Endgruppen waren 42 und die Carboxyl-Endgruppen 74 meq/kg.

Vergleichsbeispiel 3A/3B

2 Typen von handelsüblichem Polyamid 6 der relativen Viskosität 2,40 (3A) bzw. 2,44 (3B) wurden entsprechend Beispiel 2 schnellgesponnen. Die Spinntemperatur betrug 275°C, die Geschwindigkeit der Galettenduos 4510 bzw. 4520 m/min.

Tabelle 3

| Das POY hatte folgende Kennzahlen: | | | | |
|---|---|---|---|---|
| | | **Beispiel 3A** | **Beispiel 3B** | |
| Höchstzugkraftdehnung feinheitsbezogene<br>Höchstzugkraft<br>Kochschrumpf<br>Uster (Normaltest) U%<br>Titer | | 64%<br>4.4 cN/dtex<br>8%<br>0,6%<br>51 f 12 dtex | 68%<br>4,2 cN/dtex<br>8%<br>0,5%<br>52 f 12 dtex | |
| Das POY wurde anschließend auf Streckzwirnmaschinen kalt verstreckt mit den Streckverhältnissen: | | | | |
| | | 1 : 1,257 | 1 : 1,313 | |
| und hatte die Daten: | | | | |
| Höchstzugkraftdehnung feinheitsbezogene<br>Höchstzugkraft<br>Kochschrumpf<br>Uster (Normaltest) U%<br>Titer | | 44 %<br>5,0 cN/dtex<br>11 %<br>0,6 %<br>45 f 12 dtex | 38 %<br>4,8 cN/dtex<br>12 %<br>0,8%<br>43 f 12 dtex | |
| Nach der Heißluftbehandlung wurden folgende Daten ermittelt: | | | | |
| | | **Beispiel 3** | **Vergleich 3A** | **Vergleich 3B** |
| relative Viskosität | unbehandelt<br>behandelt<br>Abnahme | 2,40<br>2,19<br>- 0,21 | 2,37<br>1,93<br>-0,44 | 2,45<br>2,23<br>- 0,22 |
| Amino-Endgruppen (meq/kg) | unbehandelt<br>behandelt<br>Abnahme<br>Abnahme(%) | 42<br>34<br>-8<br>-19% | 24<br>16<br>-8<br>-33% | 43<br>27<br>-16<br>-37% |
| Carboxyl-Endgrupp. (meq/kg) | unbehandelt<br>behandelt<br>Zunahme | 74<br>78<br>+ 4 | 65<br>86<br>+21 | 51<br>64<br><+13 |

Gemäß Tabelle 3 zeigt das erfindungsgemäße Polyamid 6 eine bessere Hitzestabilisierung als die Polyamide 6 der Vergleichsbeispiele.

Beispiel 4

Caprolactam wurde in demselben VK-Rohr wie in Beispiel 1 unter Zusatz von 0,55 Gew.-% (0,375 Mol-%) Terephthalsäure, 0,33 Gew.-%.(0,239 Mol-%) Triacetondiamin, 0,5 Gew.-% Wasser und 0,3 Gew.-% Titandioxid polymerisiert. Die Polymerisation wurde bei einem Durchsatz von 25 kg/h und einer Temperatur von 255°C in der ersten Reaktionszone unter Normaldruck durchgeführt. Die Arbeitsweise entsprach im übrigen der von Beispiel 1. Das getrocknete Produkt hatte eine relative Viskosität von 2,42, einen Amino-Endgruppengehalt von 46 meq/kg und einen Carboxyl-Endgruppengehalt von 70 meq/kg. Der Gehalt an extrahierbaren Bestandteilen betrug 0,38 %.

Es wurde entsprechend Vergleichsbeispiel 2 galettenlos bei 4500 m/min versponnen, anschließend mit einem Streckverhältnis von 1 : 1,229 kalt verstreckt und mit 600 m/min geschärt.

Das POY hatte eine Feinheit von 52 f 12 dtex, 59 % Höchstzugkraftdehnung und eine feinheitsbezogene Höchstzugkraft von 4,1 cN/dtex.

Beim Elkometertest (Spaltbreite 45 μm) wurden im Mittel 0,5 Fehler/100 km gemessen.
Nach Verstreckung stellte sich eine Höchstzugkraftdehnung von 36 % und eine feinheitsbezogene Höchstzugkraft von 4,3 cN/dtex ein. Der Titer betrug 46 f 12 dtex.

Vergleichsbeispiel 4

Caprolactam wurde in demselben VK-Rohr wie in Beispiel 4 unter Zusatz von 0,53 Gew.-% (0,361 Mol-%) Terephthalsäure, 0,5 Gew.-% Wasser und 0,3 Gew.-% Titandioxid polymerisiert. Die Polymerisation wurde bei einer Temperatur von 252°C in der ersten Reaktionszone durchgeführt. Die Arbeitsweise entsprach im übrigen der von Beispiel 4. Das getrocknete Produkt hatte eine relative Viskosität von 2,39, einen Amino-Endgruppengehalt von 27 meq/kg und einen Carboxyl-Endgruppengehalt von 92 meq/kg. Der Gehalt an extrahierbaren Bestandteilen betrug 0.32 %.
Auf 50 kg obiger Polyamid 6-Schnitzel wurden 165 g Triacetondiamin (TAD) (0,33 Gew.-%) flüssig durch 2stündiges Mischen in einem Rhönradmischer aufgetrommelt.
Die Schnitzel enthielten damit die gleiche Menge an TAD in Substanz zugemischt und praktisch den gleichen Terephthalsäure-Gehalt (einpolymerisiert) wie vorstehend beschriebenes Produkt 4; bis auf die Art der TAD-Zugabe stimmten die beiden Produkte überein.
Das aufgetrommelte TAD zieht nicht (vollständig) in die Schnitzel ein. Sie bleiben TAD-feucht und von intensivem Amingeruch. Diese Eigenschaft ist bei der Handhabung äußerst nachteilig, auch sind umfangreiche Sicherheitsvorkehrungen erforderlich, da TAD ätzend wirkt.
Während der Verweilzeit im Spinnsystem baut in Beispiel 4 die Viskosität normal auf, während sie in Vergleichsbeispiel 4 drastisch abbaut. Vorteilhaft sind auch die bei Beispiel 4 vergleichsweise geringe Änderung von Aminogruppen und extrahierbaren Bestandteilen (Bestimmung: 16 Stunden Extraktion mit Methanol am Rückfluß) sowie die Tatsache, daß wesentlich weniger Spinnrauch im Düsenbereich bei der Verspinnung entsteht.

Tabelle 4

| Chemische Daten von freifallenden Fäden | | | | | |
|---|---|---|---|---|---|
| | | Beispiel 4 | | **Vergleichsbeispiel 4** | |
| relative Viskosität | | 2,48 (+0,06)[1] | | 2,24 (-0,15)[1] | |
| Endgruppen Amino- | (meq/kg) | 43 | (- 3) | 54 | (+ 27) |
| Carboxyl- | (meq/kg) | 67 | (- 3) | 88 | (- 4) |
| Extrakt | (%) | 1,4 | (+ 1,0) | 1,8 | (+ 1,5) |
| 1) Werte in Klammern: Veränderung im Vergleich zu eingesetzten Schnitzeln, bei Vergleichsbeispiel 4 im Vergleich zum Basispolymer ohne TAD. | | | | | |

Die Verspinnung und Weiterverarbeitung erfolgte unter den im Beispiel 4 aufgeführten Bedingungen. Das POY hatte eine Feinheit von 52 f 12 dtex, 54 % Höchstzugkraftdehnung und eine feinheitsbezogene Höchstzugkraft von 3,8 cN/dtex. Beim Elkometertest wurden im Mittel 7,5 Fehler (Knötchen, Kapillarbrüche, Schlingen)/100 km gefunden.
Nach Verstreckung stellte sich eine Höchstzugkraftdehnung von 35 % und eine feinheitsbezogene Höchstzugkraft von 4,2 cN/dtex ein.

Tabelle 5

| | **Beispiel 4** | Vergleichsbeispiel 4 |
|---|---|---|
| Spinnbrüche/100 kg | 1,2 | 4,0 |
| Elkometertest Fehler/100 km | 0,5 | 7,5 |
| Streckfehler/100 kg | 1,8 | 14,5 |
| Schärfehler/100 km | 0,037 | > 0,65 |

Wie Tabelle 5 zu entnehmen ist, weist das erfindungsgemäße Polyamid 6 von Beispiel 4 in allen Verarbeitungsstufen niedrigere Fehlerzahlen auf als das Polyamid 6 von Vergleichsbeispiel 4, bei dem TAD dem Polyamid in Substanz zugemischt wurde.
In Beispiel 4 ist TAD vollständiger/fester im Polyamid verankert als in Vergleichsbeispiel 4. So geht bei Extraktionsprozessen (wie z. B. bei Färbungen) weniger Amin in die wäßrige Phase über.

Nach lstündiger Extraktion von ohne Präparation aufgespultern POY mit siedendem Wasser am Rückfluß wurden folgende chemische Daten bestimmt:

Tabelle 6

| | | Beispiel 4 | Vergleichsbeispiel 4 |
|---|---|---|---|
| rel. Viskosität | vor Extraktion<br>nach Extraktion<br>Differenz | 2,42<br>2,49<br>+ 0,07 | 2,20<br>2,26<br>+ 0,06 |
| Amino-Endgruppen (meq/kg) | vor Extraktion<br>nach Extraktion<br>Differenz | 42<br>42<br>± 0 | 55<br>50<br>- 5 |

Wie aus Tabelle 6 ersichtlich, bleibt beim erfindungsgemäßen Polyamid die Anzahl der Amino-Endgruppen vor und nach der Extraktion gleich, wohingegen beim Vergleichsbeispiel nach der Extraktion weniger Amino-Endgruppen vorliegen. Somit geht beim erfindungsgemäßen Polyamid bei der Extraktion weniger Amin in die wäßrige Phase über.

Vergleichsbeispiel 5

Handelsübliches, mit 0,3 % Titandioxid mattiertes Polyamid 6 der relativen Viskosität 2,39, das kein Triacetondiamin enthielt, wurde auf die in Vergleichsbeispiel 2 beschriebene Weise ausgesponnen.

Das POY hatte eine Feinheit von 51 f 12 dtex, eine Höchstzugkraftdehnung von 57 % und eine feinheitsbezogene Höchstzugkraft von 3,8 cN/ dtex. Nach Kaltverstreckung mit einem Streckverhältnis von 1 : 1,244 wurden die in untenstehender Tabelle 7 aufgeführten Werte für die unbehandelte Probe bestimmt.

Die Belichtung und die Messung der Höchstzugkraftdehnung und Höchstzugkraft erfolgten gemeinsam mit Beispiel 5. Die Ergebnisse sind in Tabelle 7 aufgeführt.

Beispiel 5

Caprolactam wurde unter den in Beispiel 4 angegebenen Bedingungen (bei gleichen Ausgangsstoffen und -mengen) polymerisiert, wobei die gleiche Titandioxid-Type wie in Vergleichsbeispiel 5 eingesetzt wurde. Das getrocknete Polyamid hatte eine relative Viskosität von 2,43, einen Amino-Endgruppengehalt von 44 meq/kg und einen Carboxyl-Endgruppengehalt von 71 meq/kg. Der Gehalt an extrahierbaren Bestandteilen betrug 0,36 %.

Die Verspinnung erfolgte wie in Vergleichsbeispiel 2 beschrieben galettenlos bei 4500 m/min. Das POY hatte eine Feinheit von 51 f 12 dtex, eine Höchstzugkraftdehnung von 61 % und eine feinheitsbezogene Höchstzugkraft von 4,3 cN/dtex.

Nach Kaltverstreckung mit einem Streckverhältnis von 1:1,244 wurden die in untenstehender Tabelle 7 angeführten Werte für die unbehandelte Probe ermittelt.

Die Fäden wurden dann auf Rahmen gewickelt, 28 Tage in einem Xenotest 450-Gerät der Fa. Heraeus, Hanau, belichtet und die Rest-Höchstzugkrafitdehnung wie die Rest-Höchstzugkraft nach DIN 53834 mit 100 mm Einspannlänge auf einem Zwick UPM 1425 Zugprüfgerät zurückgemessen. Die Ergebnisse sind in Tabelle 7 aufgeführt.

Tabelle 7

| | | Beispiel 5 | Vergleichsbeispiel 5 |
|---|---|---|---|
| Unbehandelte Fäden | | | |
| Feinheit | (dtex) | 44 f 12 | 44 f 12 |
| Höchstzugkraftdehnung | (%) | 35 | 39 |
| Höchstzugkraft | (cN) | 199 | 196 |
| feinheitsbezogene Höchstzugkraft | (cN/dtex) | 4,52 | 4,45 |
| nach 28 Tagen Belichtung im Xenotest 450 | | | |
| Rest-Höchstzugkraftdehnung | (%) | 23 | 16 |

(fortgesetzt)

| | | | |
|---|---|---|---|
| nach 28 Tagen Belichtung im Xenotest 450 | | | |
| (=% vom Ausgangswert) | (%) | (66) | (41) |
| Rest-Höchstzugkraft | (cN) | 136 | 97 |
| (=% vom Ausgangswert) | (%) | (68) | (49) |

Tabelle 7 zeigt anschaulich, daß das in Gegenwart von Triacetondiamin und $TiO_2$ hergestellte Polyamid (Beispiel 5) eine deutlich verbesserte Lichtstabilität gegenüber einem Vergleichspolymer (Vergleichsbeispiel 5) aufweist, das nur $TiO_2$ und kein Triacetondiamin enthält.

**Patentansprüche**

1. Inhärent licht- und hitzestabilisiertes Polyamid, **gekennzeichnet durch** einen über Carboxylgruppen des Polyamids an das Kettenende der Polymerkette chemisch gebundenen Aminrest der Formel

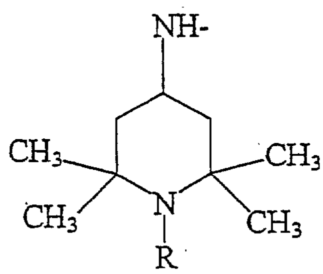

wobei R wasserstoff oder Kohlenwasserstoffreste mit 1 bis 20 C-Atomen, bevorzugt Alkylgruppen mit 1 bis 18 C-Atomen oder eine Benzylgruppe bedeutet, ausgenommen Thermoplastisch verarbeitbare, **durch** hydrolytische Polymerisation erhältliche Polyamide aus Aminosäuren und/oder Lactamen als Grundbausteine, wobei mindestens 50 Gew.-% der Polymermoleküle mehr als eine Kettenverzweigung besitzen, wobei die Polyamide in der Weise erhältlich sind, daß der Schmelze der Grundmonomeren verzweigend wirkende Komponenten in folgender Zusammensetzung zugesetzt werden:

   a) 5 bis 150 µMol/g Polymeres eines mindestens trifunktionellen, aus einem Amin oder einer Carbonsäure bestehenden Monomeren sowie
   b) 2 bis 100 µMol/g Polymeres eines mindestens bifunktionellen, aus einer Carbonsäure oder einem Amin bestehenden Monomeren, mit der Maßgabe, daß dann, wenn a) ein Amin ist, b) eine Carbonsäure sein muß, sowie dann, wenn a) eine Carbonsäure ist, b) ein Amin sein muß, sowie gegebenenfalls
   c) 5 bis 450 µMol/g Polymeres eines bei einer üblichen Polykondensation monofunktionell wirkenden Monomeren, wobei ein Molverhältnis der Komponente a) zu der Komponente b) von mindestens 1 eingehalten wird, wenn die Komponente a) trifunktionell und die Komponente b) bifunktionell ist und von mindestens 2 eingehalten wird, wenn die Komponente a) und die Komponente b) trifunktionell sind.

2. Polyamid nach Anspruch 1, **dadurch gekennzeichnet, daß** es mindestens ein Pigment enthält.

3. Polyamid nach einem der Ansprüche 1 oder 2, **dadurch gekennzeichnet, daß** es 0,03 bis 0,8 mol-%, vorzugsweise 0,06 bis 0,4 mol-%, des Aminrestes bezogen auf 1 Mol Säureamidgruppen der Polymerkette des Polyamids enthält.

4. Verfahren zur Herstellung von Polyamiden nach einem der Ansprüche 1 bis 3, **dadurch gekennzeichnet, daß** die Polymerisation bzw. Polykondensation von Ausgangsmonomeren in Gegenwart von mindestens einer Triacetondiamin-Verbindung der Formel

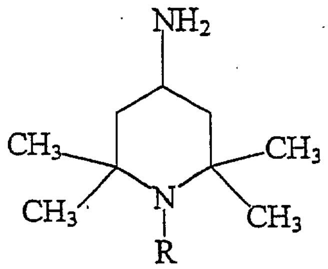

durchgeführt wird, wobei R Wasserstoff oder Kohlenwasserstoffreste mit 1 bis 20 C-Atomen, bevorzugt Alkylgruppen mit 1 bis 18 C-Atomen, oder eine Benzylgruppe bedeutet.

5. Verfahren nach Anspruch 4, **dadurch gekennzeichnet, daß** die Polymerisation bzw. Polykondensation des weiteren in Gegenwart von mindestens einem Pigment durchgeführt wird.

6. Verwendung des Polyamids nach einem der Ansprüche 1 bis 3 zur Herstellung von Fäden, Fasern oder Folien.

7. Verfahren zur Herstellung von Fäden auf der Basis von Polycaprolactam nach einem der Ansprüche 1 bis 3 durch Schnellspinnen bei Abzugsgeschwindigkeiten von mindestens 4000 m/min.

8. Fäden hergestellt aus einem Polyamid gemäß Ansprüchen 1 bis 3.

9. Verwendung der Fäden gemäß Anspruch 8 zur Herstellung von Fasern und Flächengebilden.

10. Fasern und Flächengebilde hergestellt aus den Fäden gemäß Anspruch 8.

## Claims

1. Inherently light- and heat-stabilized polyamide containing an amine radical of the formula

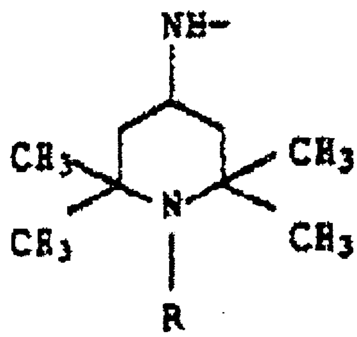

chemically attached to the chain end of the polymer chain through carboxy groups of the polyamide
where R is hydrogen or hydrocarbyl having from 1 to 20 carbon atoms, preferably alkyl having from 1 to 18 carbon atoms, or benzyl, with the exception of thermoplastically processable polyamides which can be obtained by hydrolytic polymerisation from amino acids and/or lactams as basic units at least 50 % by weight of the polymer molecules having more than one chain branch wherein the polyamides can be obtained in such a manner that branching components are added to the melt of the basic monomer in the following composition:

a) 5 to 150 µmol/g polymer of an at least trifunctional monomer consisting of an amine or a carboxylic acid and
b) 2 to 100 µmol/g polymer of an at least bifunctional monomer consisting of a carboxylic acid or an amine, with

the proviso that when a) is an amine, b) must be a carboxylic acid and when a) is a carboxylic acid, b) must be an amine, and optionally

c) 5 to 450 μmol/g polymer of a monomer which is monofunctional in normal polycondensation, a molar ratio of component a) to component b) of at least 1 being observed when component a) is trifunctional and component b) is bifunctional and a molar ratio of at least 2 being observed when component a) and component b) are trifunctional.

2. Polyamide as claimed in claim 1, comprising at least one pigment.

3. Polyamide as claimed in either of claims 1 or 2 containing from 0.03 to 0.8 mol%, preferably 0.06 to 0.4 mol%, of the amine radical, based on 1 mol of carboxamide groups of the polymer chain of the polyamide.

4. A process for preparing polyamides according to any of claims 1 to 3 which comprises an addition or condensation polymerization of starting monomers in the presence of at least one triacetonediamine compound of the formula

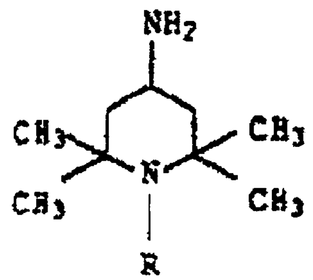

where R is hydrogen or hydrocarbyl having from 1 to 20 carbon atoms, preferably alkyl having from 1 to 18 carbon atoms, or benzyl.

5. A process as claimed in claim 4, wherein the polymerization is further effected in the presence of at least one pigment.

6. The use of the polyamide of any of claims 1 to 3 for producing filaments, fibers or films.

7. A process for producing filaments based on polycaprolactam as set forth in any of claims 1 to 3 by high-speed spinning at takeoff speeds of at least 4000 m/min.

8. Filaments obtained from a polyamide as claimed in claims 1 to 3.

9. The use of filaments of claim 8 for producing fibers and fabrics.

10. Fibers and fabrics obtained from the filaments of claim 8.

## Revendications

1. Polyamide intrinséquement protégé contre la lumière et la chaleur, **caractérisé par** la présence d’un reste amine, lié chimiquement à la fin de la chaîne du polymère via groupements carboxyliques du polyamide, de formule

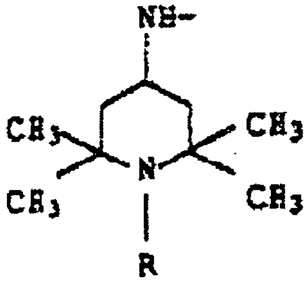

dans laquelle R représente un atome d'hydrogène ou des restes hydrocarbonés à 1 - 20 atomes de carbone, de préférence des groupements alkyle à 1 - 18 atomes de carbone, ou un groupement benzyle, excepté polyamides thermoplastiques et accessible par polymérisation avec hydrolyse à partir d'acides aminés et/ou de lactames utilisés comme motifs de base, dont au moins 50 % des molécules polymères comportent plus d'une ramification, **caractérisé en ce qu'**on peut obtenir ce polyamide en ajoutant, à la masse fondue de monomères constitutifs, des composants qui jouent le rôle d'agents ramificateurs et dont la composition est la suivante:

a) de 5 à 150 μmol, par gramme de polymère, d'un monomère au moins trifonctionnel, qui est une amine ou un acide carboxylique, ainsi que
b) de 2 à 100 μmol, par gramme de polymère, d'un monomère au moins bifonctionnel, qui est une amine ou un acide carboxylique, sous réserve que, si (a) est une amine, (b) soit un acide carboxylique et que, si (a) est un acide carboxylique, (b) soit une amine, ainsi que, éventuellement,
c) de 5 à 450 μmol, par gramme de polymère, d'un monomère qui joue le rôle d'un composé monofonctionnel dans une polycondensation habituelle, en maintenant le rapport molaire du composant (a) au composant (b) à une valeur d'au moins 1 si le composant (a) est trifonctionnel et le composant (b) est bifonctionnel, et d'au moins 2 si les composants (a) et (b) sont tri-fonctionnels.

**2.** Polyamide selon la revendication 1, **caractérisé en ce qu'**il contient au moins un pigment.

**3.** Polyamide selon la revendication 1 ou 2, **caractérisé en ce qu'**il contient 0,03-0,8% en mole, de préférence 0,06-0,4% en mole, du reste amine par rapport à 1 mole de groupements amide de la chaîne polymère du polyamide.

**4.** Procédé de préparation de polyamides, selon l'une quelconque des revendications 1 à 3, **caractérisé en ce que** l'on effectue la polymérisation, respectivement la polycondensation, de monomères de départ en présence d'au moins un composé triacétonediamine de formule

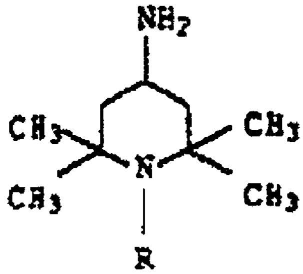

dans laquelle R représente un atome d'hydrogène ou des restes hydrocarbonés à 1-20 atomes de carbone, de préférence des groupements alkyle à 1-18 atomes de carbone, ou un groupement benzyle.

**5.** Procédé selon la revendication 4, **caractérisé en ce que** l'on effectue la polymérisation, respectivement la polycondensation, en présence d'au moins un pigment.

**6.** Utilisation d'un polyamide selon l'une quelconque des revendications 1 à 3, pour la fabrication de fils, de fibres ou

de feuilles.

**7.** Procédé de fabrication de fils à base de poly(caprolactame) selon l'une quelconque des revendications 1 à 3 par filage à grande vitesse avec des vitesses de sortie d'au moins 4000 m/min.

**8.** Fils fabriqués à partir d'un polyamide selon l'une quelconque des revendications 1 à 3.

**9.** Utilisation de fils selon la revendication 8 pour la fabrication de fibres et de structures planes.

**10.** Fibres et structures planes fabriquées à partir de fils selon la revendication 8.